# EUROPÄISCHE PATENTANMELDUNG

(11) **EP 2 505 854 A1**
(43) Veröffentlichungstag der Anmeldung: **03.10.2012**
(21) Anmeldenummer: 12161862.3
(22) Anmeldetag: 28.03.2012
(51) Int. Cl.: F16B 19/08

(54) **Verbindungselement zur Verbindung mindestens zwei aufeinander liegender Bauteile**

(30) Priorität: 01.04.2011 DE 102011015789
(71) Anmelder: Ejot GmbH & Co. KG, 57334 Bad Laasphe (DE)
(72) Erfinder: Christ, Eberhard, 99897 Tambach - Dietharz (DE)
(74) Vertreter: Bardehle, Heinz

(57) **Zusammenfassung**

Die Erfindung bezieht sich auf ein Verbindungselement zur Herstellung einer Verbindung mindestens zweier aufeinander liegender Bauteile. Zur Herstellung der Verbindung wird das Verbindungselement in die Bauteile gedrückt und dringt in diese ein, wobei das Verbindungselement unter Bildung eines Durchzugs unter plastischer Verformung der Bauteile diese durchdringt. Das Verbindungselement weist eine Bohrung auf, in die ein Dorn zur Aufweitung des Verbindungselementes gedrückt wird. Dies führt zu einer Aufweitung des Verbindungselementes auf der dem oberen Bauteil abgewandten Seite des unteren Bauteils, wodurch ein Rückziehen des Verbindungselementes aus den beiden Bauteilen verhindert wird.

## Beschreibung

Die Erfindung bezieht sich auf ein Verbindungselement zur Herstellung einer Verbindung mindestens zweier aufeinander liegender Bauteile, das zum Eindringen in die Bauteile in diese gedrückt wird, wobei das Verbindungselement unter Bildung eines Durchzugs unter plastischer Verformung der Bauteile diese durchdringt.

Ein aus der DE 694 200 39 T2 bekanntes Verbindungselement ist nach Art eines Blindniets gestaltet, das zur Verbindung zweier aufeinander liegender Bauteile mit miteinander fluchtenden Bohrungen in die Bohrungen eingeführt wird, wobei das Verbindungselement auf seiner rückwärtigen Seite mit einem Bund versehen ist, der sich satt auf das obere der beiden Bauteile legt. Das Verbindungselement enthält in einer axialen Bohrung einen Zugdorn mit einer Aufweitung, der nach Einführung des Verbindungselementes in die beiden Bohrungen in rückwärtiger Richtung gezogen wird und dabei mit seiner Aufweitung das aus dem unteren Bauteil herausragenden Ende des Verbindungselementes radial aufweitet und damit eine Vernietung gegenüber dem Bund herbeiführt, durch die die beiden Bauteile fest miteinander verbunden werden.

Der Erfindung liegt die Aufgabe zugrunde, in Abweichung von dem Prinzip des Blindniets eine Verbindung mit einem Verbindungselement zu ermöglichen, durch das zwei aufeinander liegende Bauteile, insbesondere zwei aufeinander liegende Platten, sicher miteinander verbunden werden. Erfindungsgemäß geschieht dies mit dem eingangs erwähnten Verbindungselement, das dadurch gekennzeichnet ist, dass das Verbindungselement eine Bohrung aufweist, in die ein Dorn zur Aufweitung des Verbindungselementes auf der dem oberen Bauteil abgewandten Seite des unteren Bauteils gedrückt wird.

Das Verbindungselement ist also so gestaltet, dass es zunächst das Eindringen in die beiden Bauteile ermöglicht, wobei die beiden Bauteile gelocht werden und sich innerhalb des Lochs ein Durchzug unter plastischer Verformung der Bauteile ergibt. Am Ende dieses Durchdringungsvorganges wird dann der Dorn in gleicher Bewegungsrichtung in das eingedrungene Verbindungselement eingeschoben, das dabei in axialer Richtung durch seinen Bund gehalten wird, der auf dem oberen Bauteil aufliegt. Mit dem Eindringen des Dorns in das Verbindungselement wird dieses aufgeweitet und bewirkt hinter dem unteren Bauteil eine Erweiterung, die ein Rückziehen des Verbindungselementes aus den beiden Bauteilen mit Sicherheit verhindert.

Zur Erzeugung der Aufweitung des Verbindungselementes besitzt dieses in seiner Bohrung eine Verengung, die etwa in dem Bereich liegt, der nach vollständigem Einsetzen des Verbindungselementes in die beiden Bauteile mit der freien Seite des unteren Bauteils höhenmäßig übereinstimmt.

In den Figuren ist ein Ausführungsbeispiel der Erfindung dargestellt. Es zeigen:
- Fig. 1: zwei aufeinander liegende Platten und das darüber auf diesen aufsetzende Verbindungselement mit eingeschobenem Dorn;
- Fig. 2: das gleiche Verbindungselement in einer in die beiden Platten eingeschobenen Lage;
- Fig. 3: das Verbindungselement in der gleichen Lage wie in Figur 2 dargestellt, jedoch mit dem durchgedrückten Dorn und leichter Aufweitung auf der rückwärtigen Seite der unteren Platte.

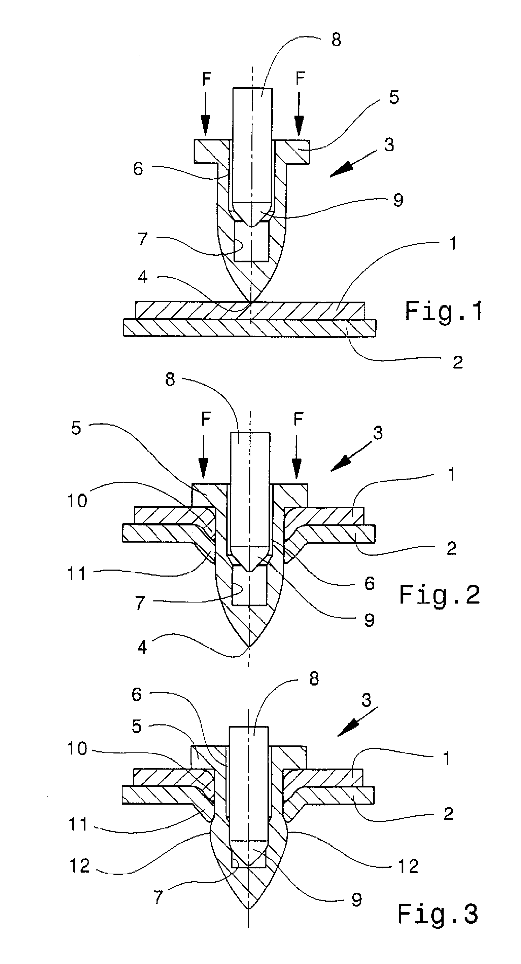

In Figur 1 ist die Schichtung zweier Platten 1 und 2 dargestellt, auf die das Verbindungselement 3 mit seiner Spitze 4 aufgesetzt ist. Das Verbindungselement 3 weist an seinem rückwärtigen Ende den Bund 5 auf, der, wie weiter unten erläutert wird, bei vollständig eingedrücktem Verbindungselement 3 auf der oberen Platte 1 aufliegt und damit den Vorgang des Eindringens des Verbindungselementes 3 begrenzt.

Das Verbindungselement 3 enthält in seinem Inneren die Bohrung 6, die sich als Verengung 7 in Richtung auf die Spitze 4 fortsetzt. In die Bohrung 6 ist der Dorn 8 eingesetzt, der an seinem vorderen Ende die konische Spitze 9 bildet, die das Vorschieben des Dornes 8 in dem Verbindungselement 3 erleichtert.

In der Figur 2 ist die Lage des Verbindungselementes 3 dargestellt, die dieses einnimmt, wenn es vollständig durch die beiden Platten 1 und 2 hindurchgetrieben ist. Es ragt dann etwas aus der unteren Platte 2 heraus, wobei sowohl aus der Platte 1 wie aus der Platte 2 jeweils ein Durchzug 10 bzw. 11 ausgeformt ist.

In der Figur 3 ist die Endlage des Verbindungselementes 3 und des Dornes 8 dargestellt, der vollständig in die Bohrung 6 des Verbindungselementes 3 eingetrieben ist. Dabei trifft der Kegel 9 des Dorns 8 auf den leicht verengten Bereich 7 der Bohrung 6 und weitet damit die Wandung des Verbindungselementes 3 etwas auf. Diese Aufweitung 12 setzt sich hinter den Durchzug 11 der unteren Platte 2, so dass das Verbindungselement 3 nicht mehr aus den beiden Platten 1 und 2 herausgezogen werden kann und somit beide Bauteile (Platten 1 und 2) fest miteinander verbunden sind.

## Patentansprüche

1. Verbindungselement (3) zur Herstellung einer Verbindung mindestens zweier aufeinander liegender Bauteile (1, 2), das zum Eindringen in die Bauteile (1, 2) in diese gedrückt wird, wobei das Verbindungselement (3) unter Bildung eines Durchzugs (10, 11) unter plastischer Verformung der Bauteile (1, 2) diese durchdringt **dadurch gekennzeichnet, dass** das Verbindungselement (3) eine Bohrung (6) aufweist, in die ein Dorn (8) zur Aufweitung (12) des Verbindungselementes (3) auf der dem oberen Bauteil (1) abgewandten Seite des unteren Bauteils (2) gedrückt wird.
